# EUROPEAN PATENT APPLICATION

(11) **EP 4 231 554 A1**
(43) Date of publication of application: **23.08.2023**
(21) Application number: 20957061.3
(22) Date of filing: 14.10.2020
(51) Int. Cl.: H04L 1/00, H04W 72/04

(54) **DATA TRANSMISSION METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2020/120935
(87) International publication number: WO 2022/077280

(57) **Abstract**

Provided in the embodiments of the present disclosure are a data transmission method and apparatus, and a communication device and a storage medium. The data transmission method provided in the embodiments of the present disclosure comprises: according to delay requirements of a service, mapping a traffic identifier (TID) of the service to one or more connections that meet the delay requirements, wherein one or more connections to which the TID is mapped are used for service transmission. In this way, according to the embodiments of the present disclosure, all services with different delay requirements can have corresponding connections for service transmission, adaptation to transmission of more services with delay requirements mapped to suitable connections can be realized, and the throughput of a system is improved.

## Description

### TECHNICAL FIELD

The disclosure relates to, but is not limited to, a field of wireless communication technologies, and in particular, relates to methods and apparatuses for transmitting data, a communication device, and a storage medium.

### BACKGROUND

A research scope of Wi-Fi (Wireless Fidelity) technology is 320MHz bandwidth transmission, aggregation and coordination of multiple frequency bands, etc. The proposed vision is increasing the rate and throughput by at least four times compared to the existing technologies. The aggregation and coordination of multiple frequency bands means simultaneous communication between devices in the frequency bands of 2.4GHz, 5.8GHz and 6-7GHz. A new MAC (Media Access Control) mechanism is needed to manage the simultaneous communication between devices in multiple frequency bands.

In the related art, a TID (traffic identifier) is an identifier used in transmitting data, which represents a service having a delay of accessing a channel. However, the existing TID mechanism cannot meet the needs of low-latency services and needs to be enhanced.

### SUMMARY

Embodiments of the disclosure provide methods and apparatus for transmitting data, a communication device and a storage medium.

A first aspect according to embodiments of the disclosure provide a method for transmitting data performed by a station (STA). The method includes:
mapping, based on a delay requirement of a service, a traffic identifier (TID) of the service to one or more links meeting the delay requirement of the service; in which the one or more links to which the TID of the service is mapped are configured to transmit the service.

In some embodiments, the method includes:
sending link information between TIDs and respective links, in which the link information includes link identifiers and respective TIDs corresponding to the link identifiers.

In some embodiments, sending the link information between the TIDs and the respective links includes:
sending, on one link, a target wake time (TWT) request carrying the link information.

In some embodiments, sending, on one link, the TWT request carrying the link information includes one of:
sending, on a link with a minimum downlink access delay among two or more links between the STA and an access point (AP), the TWT request carrying the link information; or
sending, on a link with a minimum basic service set (BSS) load among two or more links between the STA and an access point (AP), the TWT request carrying the link information.

In some embodiments, the method further includes:
receiving traffic condition information sent by an access point (AP);
in which sending, on one link, the TWT request carrying the link information includes:
sending, on one link based on the traffic condition information, the TWT request carrying the link information.

In some embodiments, sending, on one link based on the traffic condition information, the TWT request carrying the link information includes:
sending, on one link, the TWT request carrying the link information, in response to a change in the traffic condition information of at least one link.

In some embodiments, sending, on one link, the TWT request carrying the link information includes:
sending, on one link based on a capability of the STA, the TWT request carrying the link information.

In some embodiments, the link information further includes service periods (SPs) corresponding to the link identifiers.

In some embodiments, sending, on one link based on the capability of the STA, the TWT request carrying the link information includes:
sending, on one link, the TWT request carrying the link information, in response to the STA supporting synchronous transmit and receive (STR), in which the respective TIDs corresponding to the link identifiers included in the link information are different.

In some embodiments, in response to the STA supporting the STR, SPs corresponding to at least two link identifiers among the link identifiers are the same.

In some embodiments, in response to the STA supporting the STR, SPs corresponding to the link identifiers are different.

In some embodiments, sending, on one link based on the capability of the STA, the TWT request carrying the link information includes:
sending, on one link, the TWT request carrying the link information, in response to the STA not supporting synchronous transmit and receive (STR), in which the respective TIDs corresponding to the link identifiers included in the link information are different.

In some embodiments, in response to the STA not supporting the STR, SPs corresponding to the link identifiers are different.

In some embodiments, the traffic condition information includes: downlink access delay and/or basic service set (BSS) load.

In some embodiments, the method further includes:
receiving a TWT response sent back based on the TWT request, in which the TWT response is configured to indicate determining to accept the TWT request.

In some embodiments, the method further comprises:
receiving TWT information sent back, based on the TWT request, by the AP, in which the TWT information is sent back by the AP in response to determining, by the AP, that the traffic condition information at a time when receiving the TWT request is not latest information, in which the TWT information carries the link identifiers, and TIDs and SPs corresponding to the link identifiers.

A second aspect according to embodiments of the disclosure provides a method for transmitting data performed by an access point (AP). The method includes:
mapping, based on a delay requirement of a service, a traffic identifier (TID) of the service to one or more links meeting the delay requirement of the service; in which the one or more links to which the TID of the service is mapped are configured to transmit the service.

A third aspect according to embodiments of the disclosure provide a method for transmitting data performed by an access point (AP). The method includes:
receiving link information between traffic identifiers (TIDs) of services and respective links, wherein the link information comprises link identifiers and respective TIDs corresponding to the link identifiers;
in which one or more links are determined in mapping, based on a delay requirement of a service, a TID of the service to the one or more links meeting the delay requirement; and the one or more links to which the TID of the service is mapped are configured to transmit the service.

In some embodiments, receiving the link information between the TIDs of the services and the respective links includes:
receiving, on one link, a target wake time (TWT) request carrying the link information.

In some embodiments, receiving, on one link, the TWT request carrying the link information includes one of:
receiving, on a link with a minimum downlink access delay among two or more links of the AP, the TWT request carrying the link information; or
receiving, on a link with a minimum basic service set (BSS) load among two or more links of the AP, the TWT request carrying the link information.

In some embodiments, the method further includes:
sending traffic condition information; and
in which receiving, on one link, the TWT request carrying the link information includes:
receiving the TWT request carrying the link information sent, on one link based on the traffic condition information, by a station (STA).

In some embodiments, receiving the TWT request carrying the link information sent, on one link based on the traffic condition information, by the STA includes:
receiving the TWT request carrying the link information sent, on one link, by the STA, in response to a change in the traffic condition information of at least one link.

In some embodiments, receiving, on one link, the TWT request carrying the link information includes:
receiving the TWT request carrying the link information sent, on one link based on a capability of a station (STA), by the STA.

In some embodiments, the link information further includes service periods (SPs) corresponding to the link identifiers.

In some embodiments, receiving the TWT request carrying the link information sent, on one link based on the capability of the STA, by the STA includes:
receiving the TWT request carrying the link information sent, on one link, by the STA, in response to the STA supporting synchronous transmit and receive (STR), in which the respective TIDs corresponding to the link identifiers included in the link information are different.

In some embodiments, in response to the STA supporting the STR, SPs corresponding to at least two link identifiers among the link identifiers are the same.

In some embodiments, in response to the STA supporting the STR, SPs corresponding to the link identifiers are different.

In some embodiments, receiving the TWT request carrying the link information sent, on one link based on the capability of the STA, by the STA includes:
receiving the TWT request carrying the link information sent, on one link, by the STA, in response to the STA not supporting synchronous transmit and receive (STR), in which the respective TIDs corresponding to the link identifiers included in the link information are different.

In some embodiments, in response to STA not supporting the STR, SPs corresponding to the link identifiers are different.

In some embodiments, the traffic condition information includes: downlink access delay and/or basic service set (BSS) load.

In some embodiments, the method further includes:
sending a TWT response determined based on the TWT request, in which the TWT response is configured to indicate determining to accept the TWT request.

In some embodiments, the method further includes:
sending TWT information determined based on the TWT request in response to determining that the traffic condition information at a time when receiving the TWT request is not latest information, in which the TWT information carries the link identifiers, and TIDs and SPs corresponding to the link identifiers.

A fourth aspect according to embodiments of the disclosure provide an apparatus for transmitting data applied to a station (STA). The apparatus includes:
a first mapping module, configured to map, based on a delay requirement of a service, a traffic identifier (TID) of the service to one or more links meeting the delay requirement of the service; in which the one or more links to which the TID of the service is mapped are configured to transmit the service.

In some embodiments, the apparatus further includes:
a first sending module, configured to send link information between the TIDs and respective links, in which the link information includes link identifiers and respective TIDs corresponding to the link identifiers.

In some embodiments, the first sending module is configured to send, on one link, a target wake time (TWT) request carrying the link information.

In some embodiments, the first sending module is configured to send, on a link with a minimum downlink access delay among two or more links between the STA and an access point (AP), the TWT request carrying the link information; or
the first sending module is configured to send, on a link with a minimum basic service set (BSS) load among two or more links between the STA and an access point (AP), the TWT request carrying the link information.

In some embodiments, the apparatus includes:
a first receiving module, configured to receive traffic condition information sent by an access point (AP);
in which the first sending module is configured to send, on one link based on the traffic condition information, the TWT request carrying the link information.

In some embodiments, the first sending module is configured to send, on one link, the TWT request carrying the link information, in response to a change in the traffic condition information of at least one link.

In some embodiments, the first sending module is configured to send, on one link based on a capability of the STA, the TWT request carrying the link information.

In some embodiments, the link information further includes service periods (SPs) corresponding to the link identifiers.

In some embodiments, the first sending module is configured to send, on one link, the TWT request carrying the link information, in response to the STA supporting synchronous transmit and receive (STR), in which the respective TIDs corresponding to the link identifiers included in the link information are different.

In some embodiments, in response to STA supporting the STR, SPs corresponding to at least two link identifiers among the link identifiers are the same.

In some embodiments, in response to STA supporting the STR, SPs corresponding to the link identifiers are different.

In some embodiments, the first sending module is configured to send, on one link, the TWT request carrying the link information, in response to the STA not supporting synchronous transmit and receive (STR), in which the respective TIDs corresponding to the link identifiers included in the link information are different.

In some embodiments, in response to the STA not supporting the STR, SPs corresponding to the link identifiers are different.

In some embodiments, the traffic condition information includes: downlink access delay and/or basic service set (BSS) load.

In some embodiments, the first receiving module is configured to receive a TWT response sent back based on the TWT request, in which the TWT response is configured to indicate determining to accept the TWT request.

In some embodiments, the first receiving module is configured to receive TWT information sent back, based on the TWT request, by the AP, in which the TWT information is sent back by the AP in response to determining, by the AP, that the traffic condition information at a time when receiving the TWT request is not latest information, in which the TWT information carries the link identifiers, and TIDs and SPs corresponding to the link identifiers.

A fifth aspect according to embodiments of the disclosure provides an apparatus for transmitting data applied to an access point (AP). The apparatus includes:
a second mapping module, configured to map, based on a delay requirement of a service, a traffic identifier (TID) of the service to one or more links meeting the delay requirement of the service; in which the one or more links to which the TID of the service is mapped are configured to transmit the service.

A sixth aspect according to embodiments of the disclosure provides an apparatus for transmitting data applied to an access point (AP). The apparatus includes:
a second receiving module, configured to receive link information between traffic identifiers (TID) of services and respective links, in which the link information includes link identifiers and respective TIDs corresponding to the link identifiers;
in which one or more links are determined in mapping, based on a delay requirement of a service, a TID of the service to the one or more links meeting the delay requirement; and the one or more links to which the TID of the service is mapped are configured to transmit the service.

In some embodiments, the second receiving module is configured to receive, on one link, a target wake time (TWT) request carrying the link information.

In some embodiments, the second receiving module is configured to receive, on a link with a minimum downlink access delay among two or more links of the AP, the TWT request carrying the link information; or

the second receiving module is configured to receive, on a link with a minimum basic service set (BSS) load among two or more links of the AP, the TWT request carrying the link information.

In some embodiments, the apparatus further includes:
a second sending module, configured to send traffic condition information; and
the second receiving module is configured to receive the TWT request carrying the link information sent, on one link based on the traffic condition information, by a station (STA).

In some embodiments, the second receiving module is configured to receive the TWT request carrying the link information sent, on one link, by the STA, in response to a change in the traffic condition information of at least one link.

In some embodiments, the second receiving module is configured to receive the TWT request carrying the link information sent, on one link based on a capability of a station (STA), by the STA.

In some embodiments, the link information further includes service periods (SPs) corresponding to the link identifiers.

In some embodiments, the second receiving module is configured to receive the TWT request carrying the link information sent, on one link, by the STA, in response to the STA supporting synchronous transmit and receive (STR), in which the respective TIDs corresponding to the link identifiers included in the link information are different.

In some embodiments, in response to the STA supporting the STR, SPs corresponding to at least two link identifiers among the link identifiers are the same.

In some embodiments, in response to the STA supporting the STR, SPs corresponding to the link identifiers are different.

In some embodiments, the second receiving module is configured to receive the TWT request carrying the link information sent, on one link, by the STA, in response to the STA not supporting synchronous transmit and receive (STR), in which the respective TIDs corresponding to the link identifiers included in the link information are different.

In some embodiments, in response to the STA not supporting the STR, SPs corresponding to the link identifiers are different.

In some embodiments, the traffic condition information includes: downlink access delay and/or basic service set (BSS) load.

In some embodiments, the second sending module is configured to send a TWT response determined based on the TWT request, in which the TWT response is configured to indicate determining to accept the TWT request.

In some embodiments, the second sending module is configured to send TWT information determined based on the TWT request in response to determining that the traffic condition information at a time when receiving the TWT request is not latest information, in which the TWT information carries the link identifiers, and TIDs and SPs corresponding to the link identifiers.

A seventh aspect according to embodiments of the disclosure provides a communication device. The communication device includes:
a processor; and
a memory, having instructions executable by the processor;
in which the processor is configured to perform a method for transmitting data according to any one of embodiments of the disclosure when executing the executable instructions.

An eighth aspect according to embodiments of the disclosure provides a computer storage medium, having a computer-executable program stored thereon. When the executable program is executed by a processor, a method for transmitting data according to any one of embodiments of the disclosure is performed.

The technical solutions according to embodiments of the disclosure may include the following beneficial effects.

With embodiments of the disclosure, the TID of the service can be mapped, based on the delay requirement of the service, to one or more links that meet the delay requirement. The one or more links to which the TID of the service is mapped are configured to transmit the service. In this way, with embodiments of the disclosure, services with different delay requirements can be mapped to respective links for transmitting the services, such that embodiments of the disclosure can adapt to the mapping of the services with various delay requirements to appropriate links for transmission, thereby improving system throughput.

It is understandable that the foregoing general description and the following detailed description are illustrative and explanatory only and are not restrictive of the disclosure.

### BRIEF DESCRIPTION OF THE DRAWINGS

FIG. 1 is a schematic flowchart illustrating a method for transmitting data according to some embodiments of the disclosure.
FIG. 2 is a schematic flowchart illustrating a method for transmitting data according to some embodiments of the disclosure.
FIG. 3 is a schematic diagram illustrating a format of link information according to some embodiments of the disclosure.
FIG. 4 is a schematic flowchart illustrating a method for transmitting data according to some embodiments of the disclosure.
FIG. 5 is a schematic flowchart illustrating a method for transmitting data according to some embodiments of the disclosure.
FIG. 6 is a schematic flowchart illustrating a method for transmitting data according to some embodiments of the disclosure.
FIG. 7 is a schematic flowchart illustrating a method for transmitting data according to some embodiments of the disclosure.
FIG. 8 is a block diagram illustrating an apparatus for transmitting data according to some embodiments of the disclosure.
FIG. 9 is a block diagram illustrating an apparatus for transmitting data according to some embodiments of the disclosure.
FIG. 10 is a block diagram illustrating an apparatus for transmitting data according to some embodiments of the disclosure.
FIG. 11 is a schematic diagram illustrating a user equipment according to some embodiments of the disclosure.
FIG. 12 is a schematic diagram illustrating a base station according to some embodiments of the disclosure.

### DETAILED DESCRIPTION

Embodiments will be described in detail herein, examples of which are illustrated in the accompanying drawings. In the following description related to the drawings, the same numerals in different drawings refer to the same or similar elements unless otherwise indicated. The implementations described in the following embodiments do not represent all implementations consistent with embodiments of the disclosure. Rather, they are merely examples of apparatus and methods consistent with some aspects of embodiments of the disclosure as recited in the appended claims.

The terms used in the embodiments of the disclosure are only for the purpose of describing particular embodiments, and are not intended to limit the embodiments of the disclosure. As used in the embodiments of the description and the appended claims, the singular forms "a," "an" are intended to include the plural forms as well, unless the context clearly dictates otherwise. It is understandable that the term "and/or" as used herein refers to and includes any one and all possible combinations of one or more of the associated listed items.

It is understandable that although the terms "first," "second," "third," etc. may be used in embodiments of the disclosure to describe various pieces of information, such information should not be limited to these terms. These terms are only used to distinguish the same type of information from each other. For example, the first information may also be referred to as the second information, and similarly, the second information may also be referred to as the first information without departing from the scope of the embodiments of the disclosure. Depending on the context, the word "if" as used herein can be interpreted as "at the time of" or "when" or "in response to determining."

In the related art, the TID (traffic identification) is an identifier used in transmitting data, which represents that the delay of accessing a channel currently supports at least low-latency services, such as the low-latency of 10ms, and the following conclusions is formed:
If a TID is mapped in uplink (UL) to a set of enabled links for non-access point (AP) Multicast Listener Discover (MLD), then the non-AP MLD can use any link within this set of enabled links for transmit data frames from that TID.

If a TID is mapped in downlink (DL) to a set of enabled links for a non-AP MLD, then:
The non-AP MLD can retrieve buffered BUs corresponding to that TID on any links within this set of enabled links.

The AP MLD can use any link within this set of enabled links to transmit data frames from that TID, subject to existing restrictions for transmissions of frames that apply to those enabled links.

An example of restriction is if the STAis in doze state.

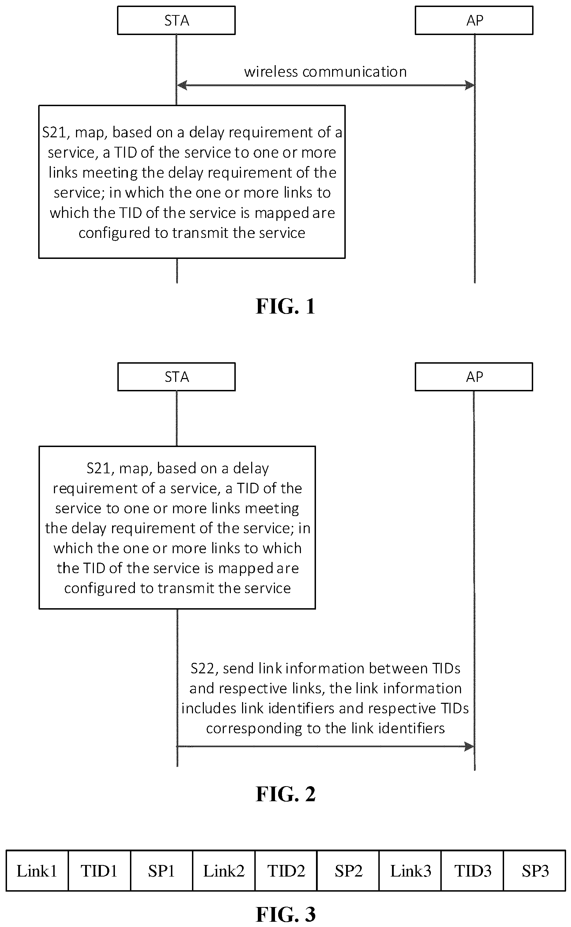

As illustrated in FIG. 1, a method for transmitting data performed by a station (STA) is provided. The method includes step S21.

At step S21, a link identifier (TID) of a service is mapped to, based on a delay requirement of the service, one or more links that meet the delay requirement of the service. The one or more links to which the TID of the service is mapped are used to transmit the service.

The "station" here can be various devices capable of accessing an access point (AP). As an example, the station may be various types of user equipment (UE), such as mobile phones, smart terminals, computers, servers, transceiver devices, medical devices, tablet computers or wearable devices. As another example, the station may be a set-top box, a game console, a multimedia device, or a sensor.

The "access point" here can be a wireless access point, a hotspot or the like. For example, the access point may be a wireless gateway, a wireless router, a terminal or a network device with a wireless fidelity chip. The access point can be equivalent to a bridge connecting wired and wireless networks, and can connect between multiple stations.

The "delay" here can be used to indicate the delay of transmitting data.

The "TID" here is configured to uniquely identify a service. That is, different services have different TIDs. Different TIDs correspond to different delay requirements.

In embodiments of the disclosure, the station maps, based on the delay requirement of the service, the TID of the service to one or more links that meets the delay requirement, such that different services with respective delay requirements have corresponding links mapped thereto, for service transmission. For example, for a low-latency service, one or more corresponding links are determined to transmit the service. In this way, the throughput of the system is improved and more delay requirements of services can be adapted to.

As illustrated in FIG. 2, in some embodiments, the method further includes step S22.

At step S22, link information between TIDs and respective links is sent. The link information includes link identifiers and respective TIDs corresponding to the link identifiers.

The "link identifier" here is configured to uniquely identify a link. For example, there are 3 links of the AP, and the link identifiers of these 3 links may be Link1, Link2 and Link3 respectively.

For example, if there are 3 links, the link identifiers of the 3 links are Link1, Link2 and Link3, and the TIDs mapped to the Link1, Link2 and Link3 are TID1, TID2 and TID3, then the link information may be Link1 and TID1, Link2 and TID2, and Link3 and TID3 respectively.

In other embodiments, the link information further includes service periods (SPs) corresponding to the link identifiers.

The "SP" here is a time period during which the service is transmitted on a link. The SP corresponding to a link identifier is the SP corresponding to the service transmitted on the link.

For example, as illustrated in FIG. 3, if there are 3 links, the link identifiers of the 3 links are Link1, Link2 and Link3, the TIDs mapped to the Link1, Link2 and Link3 are TID1, TID2 and TID3, and the SPs of services corresponding to the TIDs mapped to the Link1, Link2 and Link3 are SP1, SP2 and SP3, then the link information may be Link1, TID1 and SP1, Link2, TID2 and SP2, Link3, TID3 and SP3 respectively.

In embodiment of the disclosure, the station may send the link information between the TIDs and the respective links to the access point, to inform the access point of the links, that the STA needs to apply for, to which different services are mapped. Moreover, if the link information further includes the SPs corresponding to the link identifiers, the access point can also be informed of the SPs, that the STA needs to apply for, during which different services are transmitted on respective links.

In some embodiments, in the above step S22, one way of sending the link information between the TIDs and the respective links includes sending, on one link, a Target Wake Time (TWT) request carrying the link information.

Here, sending the TWT request may be sending a TWT request frame. The TWT request frame may include link information of two or more links. For example, a specific format of the TWT request frame may be illustrated as FIG. 3. Certainly, in other embodiments, the TWT request frame may include link information of all links of the access point or link information of some, but not all, links of the access point.

In this way, in embodiment of the disclosure, the station can send the link information in a format of the TWT request frame, which can save signaling overhead on the one hand, and facilitate the access point to clearly know respective TIDs or SPs corresponding to the links on the other hand.

In some embodiments, sending, on one link, a TWT request carrying the link information includes sending, on any one of the two or more links between the STA and the access point, a TWT request carrying the link information.

In this way, in embodiment of the disclosure, the station can use any one of the two or more links between the station and the access point to send the TWT request carrying the link information, thereby providing multiple ways to send the link information.

In other embodiments, sending, on one link, the TWT request carrying the link information includes sending, on a link with a minimum downlink access delay among the two or more links between the station and the access point, the TWT request carrying the link information.

In this way, in embodiment of the disclosure, the station can send the link information using the link with the minimum downlink access delay among the two or more links between the station and the access point. Therefore, the access point can obtain respective link information of each link as soon as possible, thereby shortening the transmission delay of the link information and improving the transmission efficiency.

In yet other embodiments, sending, on one link, the TWT request carrying the link information includes sending, on a link with a minimum basic service set (BSS) load among the two or more links between the station and the AP, the TWT request carrying the link information.

The "the link with the minimum BSS load" here means that the amount of load on the link is minimal or the load rate on the link is minimal.

In this way, in embodiment of the disclosure, the station can send the link information using the link with the minimum BSS load among the two or more links between the station and the access point. Therefore, the link information can be sent using a relatively idle link in the system, thereby improving the success rate of sending the link information.

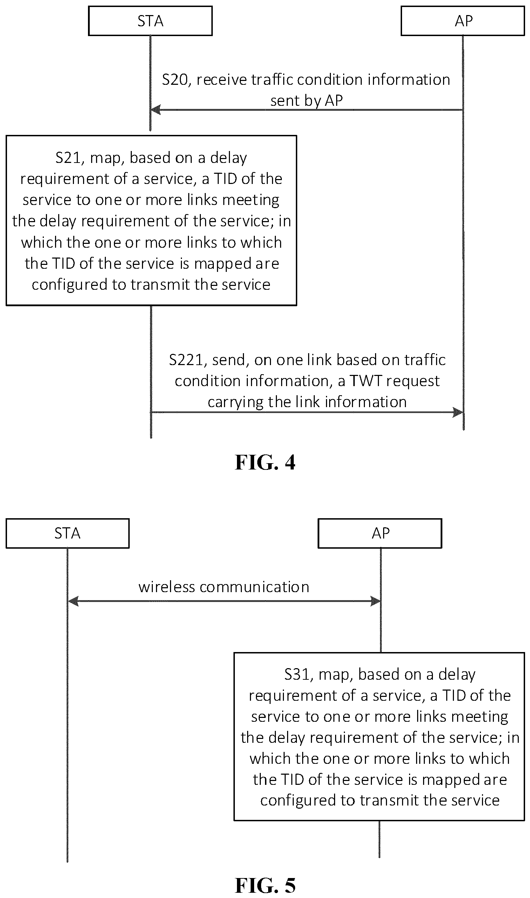

As illustrated in FIG. 4, in some embodiments, the method for transmitting data further includes step S20.

At step S20, traffic condition information sent by the AP is received.

Sending, on one link, the TWT request carrying the link information includes step S221.

At step S221, the TWT request carrying the link information is sent on one link based on the traffic condition information.

A way to realize the step S20 is receiving the traffic condition information broadcast by the AP alone.

Another way to realize the step S20 is receiving multi-link (ML) information sent by the AP. The ML information carries the traffic condition information.

The "traffic condition information" here includes, but is not limited to at least one of: downlink access delay; or basic service unit (BSS) load.

In one embodiment, the BSS load may be the amount of load on the link. In another embodiment, the BSS load may be the load rate on the link.

In some embodiments, the method for transmitting data may include: determining, by the station based on the traffic condition information, that the TID of the service is mapped to the one or more links meeting the delay requirement of the service. For example, if the service corresponding to a TID is a low-latency service, the TID is mapped to a link with a low latency requirement or a link with a relatively low BSS load.

In this way, in embodiments of the disclosure, it is possible to determine, based on the traffic condition information, an appropriate link to which the TID of a service is mapped. Therefore, it can be ensured that, for example, a low-latency service corresponding to the TID will not be mapped to a link with the high downlink access delay or the high BSS load.

The "traffic condition information" here includes the traffic condition information of all links or the traffic condition information of some, but not all, links of the AP.

For example, if there are N links of the AP, which are Link1, Link2 ... LinkN, the traffic condition information may be respective traffic condition information corresponding to Link1, Link2 ... LinkN respective, or the traffic condition information may be respective traffic condition information corresponding to some, but not all, of the Link1, Link2 ... LinkN respectively, where N is an integer greater than 1.

In some embodiments, the step S221 includes sending, on one link, the TWT request carrying the link information, in response to a change in the traffic condition information of at least one link.

An implementation of the "change in the traffic condition information" here is that the value of the downlink access delay or the BSS load included in the traffic condition information changes.

In embodiments of the disclosure, the station may determine, based on respective traffic condition information of each link broadcasted by the AP, such as respective downlink access delay or respective BSS load, whether to send the TWT request carrying the link information. In this way, in embodiments of the disclosure, the station can adjust the link(s) for transmitting the service based on the traffic condition information sent by the AP.

In some embodiments, sending, on one link, the TWT request carrying the link information includes: sending, on one link, the TWT request carrying the link information, based on a capability of the station (STA).

The "capability of the station" here include, but are not limited to, one of the STA supporting synchronous transmit and receive (STR) and the STA not supporting the STR.

The "STA supporting the STR" here means that the STA supports the synchronous transmit and receive. For example, there are two links between the station and the AP, one of which is used for receiving data, and the other is used for sending data. The station supporting the STR means that the station supports that the link for receiving data and the link for sending data work at the same time.

The "STA not supporting the STR" here means that the STA does not support the synchronous transmit and receive.

In some embodiments, sending, on one link based on the capability of the STA, the TWT request carrying the link information includes sending, on one link, the TWT request carrying the link information, in response to the STA supporting the STR, in which the respective TIDs corresponding to link identifiers included in the link information are different.

In embodiments of the disclosure, when the STA supports the STR, in the link information carried in the sent TWT request, respective SPs corresponding to the link identifiers may be the same or different.

For example, in some embodiments, if the STA supports the STR, the SPs corresponding to at least two link identifiers among the link identifiers are the same.

In this example, the SPs corresponding to at least two link identifiers being the same means that that SPs are completely or partially the same. For example, if SP1 corresponds to the Link1 and SP2 corresponds to the Link2, then the SP1 and the SP2 completely or partially overlap in the time domain.

As another example, in other embodiments, if the STA supports the STR, the SPs corresponding to the link identifiers are different.

In this way, in embodiments of the disclosure, since the STA supports the STR, transmission of the services corresponding to different links can be realized regardless of whether the SPs during which the services are transmitted on the links are set to be the same or different.

In other embodiments, sending, on one link based on the capability of the STA, the TWT request carrying the link information includes sending, on one link, the TWT request carrying the link information in response to the STA not supporting the STR, in which the respective TIDs corresponding to the link identifiers included in the link information are different.

In embodiments of the disclosure, when the STA does not support the STR, in the link information carried in the sent TWT request, the respective SPs corresponding to the link identifiers are different. For example, in some embodiments, if the STA does not support the STR, the SPs corresponding to the link identifiers are different.

In this way, in embodiments of the disclosure, since the STA does not support the STR, by setting the SPs during which the services are transmitted on the links to be different, which can reduce, to a certain extent, a conflict caused by transmitting data of different services at the same time but the station does not support the STR.

In some embodiments, the method for transmitting data further includes: receiving a TWT response returned based on the TWT request. The TWT response is configured to indicate determining to accept the TWT request.

The "TWT response" here may be a TWT response frame.

The "TWT response" here is configured to indicate that it is determined to accept the TWT request. That is, the TWT response is configured to indicate that the AP accepts the request from the station for mapping the TID of the service to the one or more links, and/or accepts the request from the station for requesting the SP of the service during which the service is transmitted on the one or more links.

In embodiments of the disclosure, after the station sends the TWT request to the AP to request the transmission of the service on the link and the corresponding SP, if the TWT response sent back by the AP based on the TWT request is received, it can be determined that the AP accepts the TWT request from the station, such that the station can know that it can transmit service based on the content of the TWT request.

In some embodiments, the method for transmitting data further includes: receiving TWT information sent back by the AP based on the TWT request. The TWT information is sent back by the AP in response to determining, by the AP, that the traffic link information at the time when receiving the TWT request is not the latest information. The TWT information carries the link identifiers, and TIDs and SPs corresponding to the link identifiers.

In some embodiments of the disclosure, when the AP determines that the traffic condition information when the STA sends the TWT request is not the latest traffic condition information, the AP sends back the TWT information. The "TWT information" here is determined by the AP based on the latest traffic condition information.

It is understandable that the AP can map, based on the delay requirement of the service, the TID of the service to one or more links meeting the delay requirement of the service.

When the STA sends the TWT request, if the traffic condition information in the AP is not the latest traffic condition information, the AP returns the TWT response based on the TWT request. If the traffic condition information of the AP changes, the station cannot accurately determine a link that meets the delay requirement of the service. Then, the AP can determine, based on the updated traffic condition information, the link information of one or more links, to which the TID of the service is mapped and that meet the delay requirement of the service. For example, the AP determines the TWT information including the link identifiers, and TIDs and SPs corresponding to the link identifiers.

In this way, in embodiments of the disclosure, if the traffic condition information in the AP when the station sends the TWT request is not the latest traffic condition information, it is also possible to determine, based on the TWT information, the link meeting the delay requirement of a service and the SP during which the service is transmitted on the link.

It is understandable that the following methods for transmitting data are performed by the access point, which are similar to the description of the above-mentioned methods for transmitting data performed by the station. The technical details that are not disclosed in embodiments of the methods for transmitting data performed by the access point can refer to the description of the embodiment of the methods for transmitting data performed by the station in the disclosure, which are not described in detail here.

As illustrated in FIG. 5, embodiments of the disclosure provide a method for transmitting data performed by an AP. The method includes step S31.

At step S31, based on a delay requirement of a service, a TID of the service is mapped to one or more links meeting the delay requirement of the service. The one or more links to which the TID and the service is mapped are configured to transmit the service.

The TID corresponding to a low-latency service is not mapped to all links. For example, the TID corresponding to the low-latency service is not mapped to a link with high downlink access delay or high BSS load.

In embodiments of the disclosure, the AP can map, based on the delay requirement of the service, the TID of the service to the one or more links that meet the delay requirement of the service. In this way, for services with different latency requirements, corresponding links can be determined for transmitting the services, thereby improving the throughput of the system.

In other embodiments, the AP may also map, based on the delay requirement of the service and respective traffic condition information of links of the AP, the TID of the service to the one or more links that meet the delay requirement of the service.

It is understandable that that the following methods for transmitting data are performed by the access point, which are similar to the description of the above-mentioned methods for transmitting data performed by the station. The technical details that are not disclosed in embodiments of the methods for transmitting data performed by the access point can refer to the description of the embodiment of the methods for transmitting data performed by the station in the disclosure, which are not described in detail here.

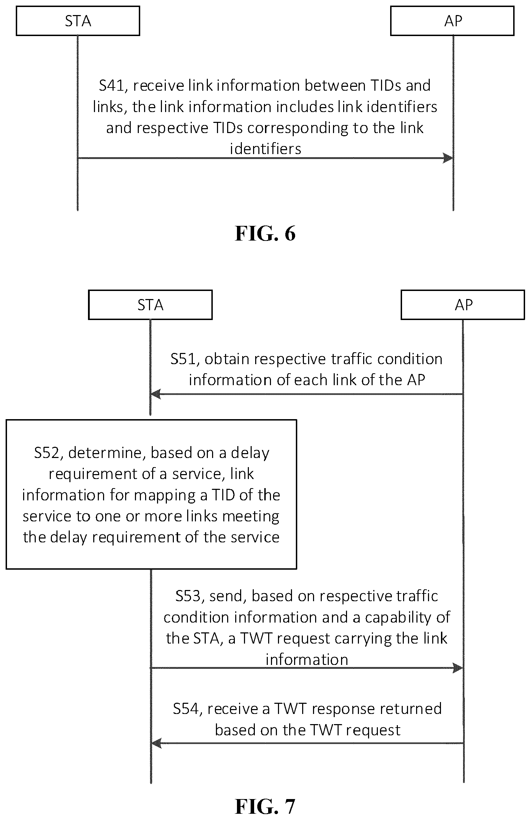

As illustrated in FIG. 6, embodiments of the disclosure provide a method for transmitting data performed by an AP. The method includes step S41.

At step S41, link information between TIDs of services and respective links is received. The link information includes link identifiers and respective TIDs corresponding to the link identifiers.

One or more links are determined in mapping, based on a delay requirement of a service, a TID of the service to the one or more links that meet the delay requirement of the service. The one or more links to which the TID of the service is mapped are configured to transmit the service.

In this way, in embodiments of the disclosure, the AP can receive the link information between the TIDs and the respective links sent by the station, to know respective links for transmitting the services having different delay requirements, thereby facilitating the subsequent transmission of the services on these links. In addition, in embodiments of the disclosure, the station restricts services with different delay requirements to corresponding links that meet respective delay requirements, which can improve the throughput of the system and be suitable for more service transmission.

In some embodiments, the link information further includes service periods corresponding to the link identifiers.

In some embodiments, receiving the link information between the TIDs of the services and the respective links includes: receiving, on one link, a target wake time (TWT) request carrying the link information.

In some embodiments, receiving, on one link, the TWT request carrying the link information includes: receive, on any one of two or more links of the AP, the TWT request carrying the link information.

In other embodiments, receiving, on one link, the TWT request carrying the link information includes receiving, on a link with a minimum downlink access delay among the two or more links of the AP, the TWT request carrying the link information.

In yet other embodiments, receiving, on one link, the TWT request carrying the link information includes receiving, on a link with a minimum BSS load among the two or more links of the AP, the TWT request carrying the link information.

In some embodiments, the method further includes sending traffic condition information.

Receiving, on one link, the TWT requests carrying the link information includes: receiving the TWT request carrying the link information sent, on one link based on the traffic condition information, by the STA.

In some embodiments, the traffic condition information includes: downlink access delay and/or BSS load.

In some embodiments, receiving the TWT request carrying the link information sent, on one link based on the traffic condition information, by the STA includes: receiving the TWT request carrying the link information sent by the STA on one link, in response to a change in the traffic condition information of at least one link.

In some embodiments, receiving, on one link, the TWT request carrying the link information includes: receiving the TWT request carrying link information sent, on one link based on a capability of the STA, by the STA.

In some embodiments, receiving the TWT request carrying link information sent, on one link based on the capability of the STA, by the STA includes: receiving the TWT request carrying link information sent, on one link, by the STA, in response to the STA supporting STR. The respective TIDs corresponding to the link identifiers included in the link information are different.

In some embodiments, if the STA supports the STR, SPs corresponding to at least two link identifiers among the link identifiers are the same.

In some embodiments, if the STA supports the STR, SPs corresponding to the link identifiers are different.

In some embodiments, receiving the TWT request carrying the link information sent, on one link based on the capability of the STA, by the STA includes: receiving the TWT request carrying the link information sent, on one link, by the STA, in response to the STA not supporting the STR. Respective TIDs corresponding to the link identifiers included in the link information are different.

In some embodiments, if the STA does not support the STR, SPs corresponding to the link identifiers are different.

In some embodiments, the method further includes: sending a TWT response determined based on the TWT request. The TWT response is configured to indicate determining to accept the TWT request.

In some embodiments, the method further includes: sending TWT information determined based on the TWT request in response to determining that the traffic condition information when receiving the TWT request is not the latest information. The TWT information carries the link identifiers, and TIDs and SPs corresponding to the link identifiers.

The "TWT information" here may be determined based on the latest traffic condition information. In this way, in embodiments of the disclosure, when the update of the traffic condition information of the AP is relatively slow, if the TWT request is received before the update of the traffic condition information, it is also possible to determine the one or more links meeting the delay requirement of the service and the SP during which the service is transmitted on the one or more links.

A specific example is provided below in conjunction with any of the above-mentioned embodiments.

As illustrated in FIG. 7, embodiments of the disclosure further provide a method for transmitting data performed by a STA. The method includes the following.

At step S51, respective traffic condition information of each link of the AP is obtained.

In an embodiment, the station obtains the traffic condition information of each link broadcasted by the access point independently, where the traffic condition information includes downlink access delay and/or BSS load.

At step S52, link information for mapping a TID of a service to one or more links meeting a delay requirement of the service is determined based on the delay requirement of the service.

In an embodiment, the station maps the TID of the service to one or more links that meet the delay requirement of the service based on the delay requirement of the service, and determines the link information for mapping the TIDs to respective links based on the mapping relationships between the TIDs and respective links.

At step S53, a TWT request carrying the link information is sent based on the respective traffic condition information and a capability of the station.

In an embodiment, the station sends the TWT request carrying the link information in response to a change in the traffic condition information of one of the links between the STA and the access point and the station supporting the STR. The TIDs corresponding to the link identifiers included in the link information are different, and the SPs corresponding to the link identifiers are different.

In another embodiment, the station sends the TWT request carrying the link information in response to a change in the traffic condition information of one of the links between the STA and the access point and the station supporting the STR. The TIDs corresponding to the link identifiers included in the link information are different, and the SPs corresponding to the link identifiers are the same.

In yet another embodiment, the station sends the TWT request carrying the link information in response to a change in the traffic condition information of one of the links between the STA and the access point and the station not supporting the STR. The TIDs corresponding to the link identifiers included in the link information are different, and the SPs corresponding to the link identifiers are different.

At step S54, a TWT response returned based on the TWT request is received.

In an embodiment, the station receives the TWT response returned, based on the TWT request, by the access point. The TWT response is configured to indicate that the access point accepts the TWT request from the station.

In another embodiment, if the traffic condition information in the AP is not the latest traffic condition information when the station sends the TWT request, the foregoing step S54 may be that the station receives the TWT information returned by the access point based on the TWT request, in which, The TWT information carries the link identifiers, TIDs and SPs corresponding to the link identifiers.

In embodiments of the disclosure, the station maps, based on the delay requirement of the service, the TID of the service to one or more links meeting the delay requirement of the service, such that for services with different delay requirements, corresponding links are determined for transmitting the services. For example, a low-latency service has one or more links mapped thereto to transmit the service. In this way, the throughput of the system is improved and the delay requirements of more services can be adapted to.

Further, the station can change a link for transmitting the service based on the traffic condition information of each link sent by the access point, to determine for each service a more suitable link that meets the delay requirement of the service.

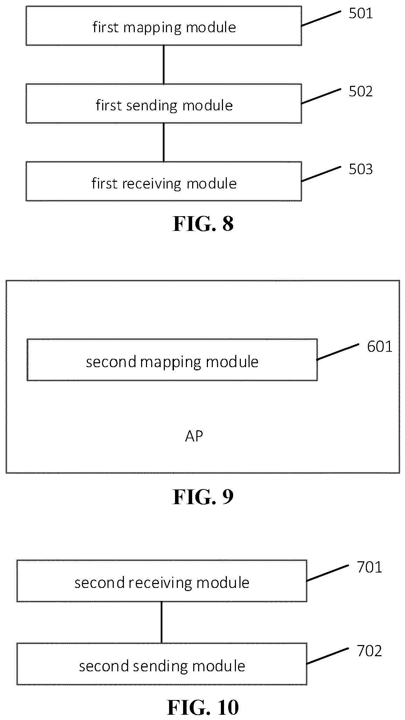

As illustrated in FIG. 8, embodiments of the disclosure further provide an apparatus for transmitting data applied to a STA. The apparatus includes a first mapping module 501.

The first mapping module 501 is configured to map, based on a delay requirement of a service, a traffic identifier (TID) of the service to one or more links meeting the delay requirement of the service. The one or more links to which the TID of the service is mapped are configured to transmit the service.

In some embodiments, the apparatus further includes a first sending module 502.

The first sending module 502 is configured to send link information between the TIDs and respective links. The link information includes link identifiers and respective TIDs corresponding to the link identifiers.

In some embodiments, the first sending module 502 is configured to send, on one link, a target wake time (TWT) request carrying the link information.

In some embodiments, the first sending module 502 is configured to send, on a link with a minimum downlink access delay among two or more links between the STA and an access point (AP), the TWT request carrying the link information.

Alternatively, the first sending module 502 is configured to send, on a link with a minimum basic service set (BSS) load among two or more links between the STA and an access point (AP), the TWT request carrying the link information.

In some embodiments, the apparatus includes a first receiving module 503.

The first receiving module 503 is configured to receive traffic condition information sent by an access point (AP).

The first sending module 502 is configured to send, on one link based on the traffic condition information, the TWT request carrying the link information.

In some embodiments, the first sending module 502 is configured to send, on one link, the TWT request carrying the link information, in response to a change in the traffic condition information of at least one link.

In some embodiments, the first sending module 502 is configured to send, on one link based on a capability of the STA, the TWT request carrying the link information.

In some embodiments, the link information further includes service periods (SPs) corresponding to the link identifiers.

In some embodiments, the first sending module 502 is configured to send, on one link, the TWT request carrying the link information, in response to the STA supporting synchronous transmit and receive (STR). The respective TIDs corresponding to the link identifiers included in the link information are different.

In some embodiments, in response to STA supporting the STR, SPs corresponding to at least two link identifiers among the link identifiers are the same.

In some embodiments, in response to STA supporting the STR, SPs corresponding to the link identifiers are different.

In some embodiments, the first sending module 502 is configured to send, on one link, the TWT request carrying the link information, in response to the STA not supporting synchronous transmit and receive (STR). The respective TIDs corresponding to the link identifiers included in the link information are different.

In some embodiments, in response to the STA not supporting the STR, SPs corresponding to the link identifiers are different.

In some embodiments, the traffic condition information includes: downlink access delay and/or basic service set (BSS) load.

In some embodiments, the first receiving module 503 is configured to receive a TWT response sent back based on the TWT request. The TWT response is configured to indicate determining to accept the TWT request.

In some embodiments, the first receiving module 503 is configured to receive TWT information sent back, based on the TWT request, by the AP. The TWT information is sent back by the AP in response to determining, by the AP, that the traffic condition information at a time when receiving the TWT request is not latest information. The TWT information carries the link identifiers, and TIDs and SPs corresponding to the link identifiers.

As illustrated in FIG. 9, embodiments of the disclosure provides an apparatus for transmitting data applied to an access point (AP). The apparatus includes a second mapping module 601.

The second mapping module 601 is configured to map, based on a delay requirement of a service, a traffic identifier (TID) of the service to one or more links meeting the delay requirement of the service. The one or more links to which the TID of the service is mapped are configured to transmit the service.

As illustrated in FIG. 10, embodiments of the disclosure provides an apparatus for transmitting data applied to an access point (AP). The apparatus includes a second receiving module 701.

The second receiving module 701 is configured to receive link information between traffic identifiers (TID) of services and respective links. The link information includes link identifiers and respective TIDs corresponding to the link identifiers.

One or more links are determined in mapping, based on a delay requirement of a service, a TID of the service to one or more links meeting the delay requirement; and the one or more links to which the TID of the service is mapped are configured to transmit the service.

In some embodiments, the second receiving module 701 is configured to receive, on one link, a target wake time (TWT) request carrying the link information.

In some embodiments, the second receiving module 701 is configured to receive, on a link with a minimum downlink access delay among two or more links of the AP, the TWT request carrying the link information.

Alternatively, the second receiving module 701 is configured to receive, on a link with a minimum basic service set (BSS) load among two or more links of the AP, the TWT request carrying the link information.

In some embodiments, the apparatus further includes a second sending module 702.

The second sending module 702 is configured to send traffic condition information.

The second receiving module 701 is configured to receive the TWT request carrying the link information sent, on one link based on the traffic condition information, by a station (STA).

In some embodiments, the second receiving module 701 is configured to receive the TWT request carrying the link information sent, on one link, by the STA, in response to a change in the traffic condition information of at least one link.

In some embodiments, the second receiving module 701is configured to receive the TWT request carrying the link information sent, on one link based on a capability of a station (STA), by the STA.

In some embodiments, the link information further includes service periods (SPs) corresponding to the link identifiers.

In some embodiments, the second receiving module 701 is configured to receive the TWT request carrying the link information sent, on one link, by the STA, in response to the STA supporting synchronous transmit and receive (STR). The respective TIDs corresponding to the link identifiers included in the link information are different.

In some embodiments, in response to the STA supporting the STR, SPs corresponding to at least two link identifiers among the link identifiers are the same.

In some embodiments, in response to the STA supporting the STR, SPs corresponding to the link identifiers are different.

In some embodiments, the second receiving module 701 is configured to receive the TWT request carrying the link information sent, on one link, by the STA, in response to the STA not supporting synchronous transmit and receive (STR). The respective TIDs corresponding to the link identifiers included in the link information are different.

In some embodiments, in response to the STA not supporting the STR, SPs corresponding to the link identifiers are different.

In some embodiments, the traffic condition information includes: downlink access delay and/or basic service set (BSS) load.

In some embodiments, the second sending module 702 is configured to send a TWT response determined based on the TWT request. The TWT response is configured to indicate determining to accept the TWT request.

In some embodiments, the second sending module 702 is configured to send TWT information determined based on the TWT request in response to determining that the traffic condition information at a time when receiving the TWT request is not latest information. The TWT information carries the link identifiers, and TIDs and SPs corresponding to the link identifiers.

Regarding the apparatuses in the above embodiments, the specific manner in which each module performs operations has been described in detail in the embodiments of the methods, and will not be described in detail here.

Embodiments of the disclosure provide a communication device. The communication device includes a processor and a memory having instructions executable by the processor.

The processor is configured to perform a method for transmitting data according to any one of embodiments of the disclosure when executing the executable instructions.

The user equipment (UE) here includes access points or stations.

The processor may include various types of storage media, which are non-transitory computer storage media, and can continue to memorize and store information on the UE after the UE is powered off.

The processor may be connected to the memory through a bus or the like, for reading the executable program stored on the memory, such as, at least one of the methods illustrated as FIG. 1 to FIG. 2 and FIG. 4 to FIG. 7.

Embodiments of the disclosure further provides a computer storage medium, having a computer-executable program stored thereon. When the executable program is executed by a processor, a method for transmitting data according to any one of embodiments of the disclosure is performed, such as, at least one of the methods illustrated as FIG. 1 to FIG. 2 and FIG. 4 to FIG. 7.

Regarding the apparatuses in the above-mentioned embodiment, the specific manner in which each module performs operations has been described in detail in the embodiments of the methods, and will not be described in detail here.

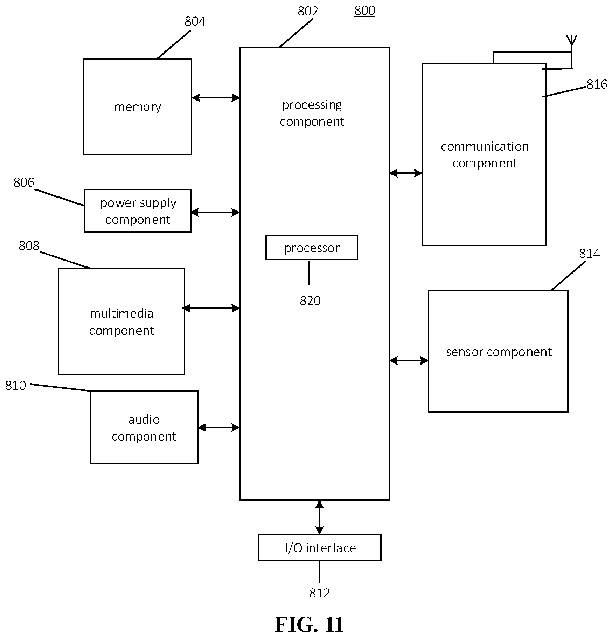

FIG. 11 is a block diagram of a UE 800 according to embodiments of the disclosure. For example, the UE 800 may be a mobile phone, a computer, a digital broadcast terminal, a messaging device, a game console, a tablet device, a medical device, a fitness device, a personal digital assistant, and the like.

As illustrated in FIG. 11, the UE 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the overall operation of the UE 800, such as operations associated with display, phone calls, data communications, camera operations, and recording operations. The processing component 802 can include one or more processors 820 to execute instructions to perform all or some of the steps of the methods described above. Additionally, the processing component 802 may include one or more modules that facilitate the interaction between processing component 802 and other components. For example, the processing component 802 may include a multimedia module to facilitate the interaction between the multimedia component 808 and the processing component 802.

The memory 804 is configured to store various types of data to support operations of the UE 800. Examples of such data include instructions for operating any application or method on the UE 800, contact data, phonebook data, messages, pictures, videos, and the like. The memory 804 may be implemented by any type of volatile or non-volatile storage device or a combination thereof, such as static random access memory (SRAM), electrically erasable programmable read only memory (EEPROM), erasable programmable read only memory (EPROM), programmable read-only memory (PROM), read only memory (ROM), magnetic memory, flash memory, magnetic disk or optical disk.

The power supply component 806 provides power to various components of the UE 800. The power supply component 806 may include a power management system, one or more power supplies, and other components associated with generating, managing, and distributing power to the UE 800.

The multimedia component 808 includes a screen that provides an output interface between the UE 800 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touch, swipe, and gestures on the touch panel. The touch sensor can sense not only the boundaries of a touch or swipe action, but also the duration and pressure associated with the touch or swipe action. In some embodiments, the multimedia component 808 includes a front-facing camera and/or a rear-facing camera. When the UE 800 is in an operation mode, such as a shooting mode or a video mode, the front-facing camera and/or the rear-facing camera may receive external multimedia data. Each of the front-facing and rear-facing cameras can be a fixed optical lens system or have focal length and optical zoom capability.

The audio component 810 is configured to output and/or input audio signals. For example, the audio component 810 includes a microphone (MIC) that is configured to receive external audio signals when the UE 800 is in operating modes, such as call mode, recording mode, and voice recognition mode. The microphone is configured to receive external audio signals. The received audio signal may be further stored in the memory 804 or transmitted via the communication component 816. In some embodiments, the audio component 810 also includes a speaker for outputting the audio signals.

The I/O interface 812 is configured to provide an interface between the processing component 802 and a peripheral interface module. The peripheral interface module may be a keyboard, a click wheel, a button, and the like. These buttons may include, but are not limited to, home button, volume buttons, start button, and lock button.

The sensor component 814 includes one or more sensors for providing status assessment of various aspects of the UE 800. For example, the sensor component 814 can detect the on/off state of the UE 800, the relative positioning of components, such as the display and keypad of the UE 800. The sensor component 814 can also detect a change in the position of the UE 800 or a component of the UE 800, the presence or absence of contact with the UE 800, the orientation or acceleration/deceleration of the UE 800 and the temperature change of the UE 800. The sensor component 814 may include a proximity sensor configured to detect the presence of nearby objects in the absence of any physical contact. The sensor component 814 may also include a light sensor, such as a complementary metal oxide semiconductor (CMOS) or charge-coupled device (CCD) image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the UE 800 and other devices. The UE 800 may access a wireless network based on a communication standard, such as Wi-Fi, 2G or 3G, or a combination thereof. In some examples, the communication component 816 receives broadcast signals or broadcast related information from an external broadcast management system via a broadcast channel. In some examples, the communication component 816 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In some examples, the UE 800 may be implemented by one or more application specific integrated circuits (ASICs), digital signal processors (DSPs), digital signal processing devices (DSPDs), programmable logic devices (PLDs), field programmable gate array (FPGA), controller, microcontroller, microprocessor or other electronic component implementation for performing the above method.

In some embodiments, there is also provided a non-transitory computer-readable storage medium including instructions, such as a memory 804 including instructions. The instructions are executable by the processor 820 of the UE 800 to perform the above method. For example, the non-transitory computer-readable storage medium may be ROM, random access memory (RAM), CD-ROM, magnetic tape, floppy disk, optical data storage device, and the like.

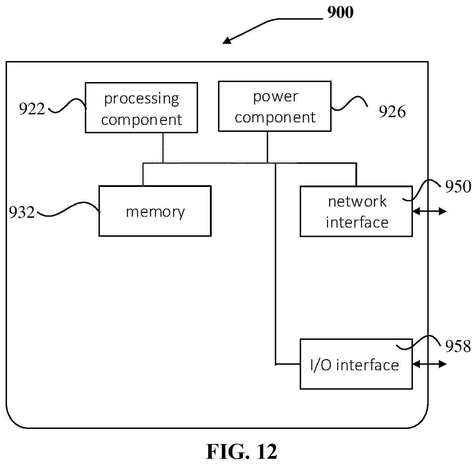

FIG. 12 is a block diagram illustrating a base station in accordance with embodiments of the disclosure. For example, the base station 900 may be a network side device. As illustrated in FIG. 12, the base station 900 includes a processing component 922 and memory resources represented by the memory 932 for storing instructions. The processing component 922 further includes one or more processors. The instructions may be application programs and can be executed by the processing component 922. The application program stored in the memory 932 may include one or more modules, each corresponding to a set of instructions. Further, the processing component 922 is configured to execute the instructions to perform the foregoing method, such as the method according to any of embodiments of the disclosure performed by the base station, such as the method as illustrated in FIG. 1 to FIG. 2 and FIG. 4 to FIG. 7.

The base station 900 further includes a power component 926 configured to perform power management of the base station 900, a wired or wireless network interface 950 configured to connect the base station 900 to the network, and an input/output (I/O) interface 958. The base station 900 may operate an operating system based on the memory, such as Windows ServerTM, Mac OS XTM, UnixTM, LinuxTM, FreeBSDTM, or the like.

Other implementations of the disclosure will be readily got by those skilled in the art upon consideration of the specification and practice of the disclosure. This disclosure is intended to cover any variations, uses, or adaptations of embodiments that follow the general principles of the embodiments and include those common design and conventional technical means that are not disclosed herein. The specification and examples are to be regarded as examples only, with the true scope and spirit of embodiments of the disclosure being indicated by the following claims.

It is understandable that the embodiments of the disclosure are not limited to the precise structures described above and illustrated in the accompanying drawings and that various modifications and changes may be made without departing from the scope thereof. The scope of embodiments of the disclosure is limited only by the appended claims.

## Claims

1. A method for transmitting data, performed by a station (STA), the method comprising:
mapping, based on a delay requirement of a service, a traffic identifier (TID) of the service to one or more links meeting the delay requirement of the service; wherein the one or more links to which the TID of the service is mapped are configured to transmit the service.

2. The method of claim 1, further comprising:
sending link information between TIDs and respective links, wherein the link information comprises link identifiers and respective TIDs corresponding to the link identifiers.

3. The method of claim 2, wherein sending the link information between the TIDs and the respective links comprises:
sending, on one link, a target wake time (TWT) request carrying the link information.

4. The method of claim 3, wherein sending, on one link, the TWT request carrying the link information comprises one of:
sending, on a link with a minimum downlink access delay among two or more links between the STA and an access point (AP), the TWT request carrying the link information; or
sending, on a link with a minimum basic service set (BSS) load among two or more links between the STA and an access point (AP), the TWT request carrying the link information.

5. The method of claim 3, comprising:
receiving traffic condition information sent by an access point (AP);
wherein sending, on one link, the TWT request carrying the link information comprises:
sending, on one link based on the traffic condition information, the TWT request carrying the link information.

6. The method of claim 5, wherein sending, on one link based on the traffic condition information, the TWT request carrying the link information comprises:
sending, on one link, the TWT request carrying the link information, in response to a change in the traffic condition information of at least one link.

7. The method of any one of claims 3 to 6, wherein sending, on one link, the TWT request carrying the link information comprises:
sending, on one link based on a capability of the STA, the TWT request carrying the link information.

8. The method of claim 7, wherein the link information further comprises service periods (SPs) corresponding to the link identifiers.

9. The method of claim 8, wherein sending, on one link based on the capability of the STA, the TWT request carrying the link information comprises:
sending, on one link, the TWT request carrying the link information, in response to the STA supporting synchronous transmit and receive (STR), wherein the respective TIDs corresponding to the link identifiers comprised in the link information are different.

10. The method of claim 9, wherein SPs corresponding to at least two link identifiers among the link identifiers are the same.

11. The method of claim 9, wherein SPs corresponding to the link identifiers are different.

12. The method of claim 8, wherein sending, on one link based on the capability of the STA, the TWT request carrying the link information comprises:
sending, on one link, the TWT request carrying the link information, in response to the STA not supporting synchronous transmit and receive (STR), wherein the respective TIDs corresponding to the link identifiers comprised in the link information are different.

13. The method of claim 12, wherein SPs corresponding to the link identifiers are different.

14. The method of claim 5, wherein the traffic condition information comprises: downlink access delay and/or basic service set (BSS) load.

15. The method of any one of claims 3 to 14, further comprising:
receiving a TWT response sent back based on the TWT request, wherein the TWT response is configured to indicate determining to accept the TWT request.

16. The method of any one of claims 5 to 14, further comprising:
receiving TWT information sent back, based on the TWT request, by the AP, wherein the TWT information is sent back by the AP in response to determining that the traffic condition information at a time when receiving the TWT request is not latest information, wherein the TWT information carries the link identifiers, and TIDs and SPs corresponding to the link identifiers.

17. A method for transmitting data, performed by an access point (AP), the method comprising:
mapping, based on a delay requirement of a service, a traffic identifier (TID) of the service to one or more links meeting the delay requirement of the service; wherein the one or more links to which the TID of the service is mapped are configured to transmit the service.

18. A method for transmitting data, performed by an access point (AP), the method comprising:
receiving link information between traffic identifiers (TIDs) of services and respective links, wherein the link information comprises link identifiers and respective TIDs corresponding to the link identifiers;
wherein one or more links are determined in mapping, based on a delay requirement of a service, a TID of the service to the one or more links meeting the delay requirement; and the one or more links to which the TID of the service is mapped are configured to transmit the service.

19. The method of claim 18, wherein receiving the link information between the TIDs of the services and the respective links comprises:
receiving, on one link, a target wake time (TWT) request carrying the link information.

20. The method of claim 19, wherein receiving, on one link, the TWT request carrying the link information comprises one of:
receiving, on a link with a minimum downlink access delay among two or more links of the AP, the TWT request carrying the link information; or
receiving, on a link with a minimum basic service set (BSS) load among two or more links of the AP, the TWT request carrying the link information.

21. The method of claim 20, further comprising:
sending traffic condition information; and
wherein receiving, on one link, the TWT request carrying the link information comprises:
receiving the TWT request carrying the link information sent, on one link based on the traffic condition information, by a station (STA).

22. The method of claim 21, wherein receiving the TWT request carrying the link information sent, on one link based on the traffic condition information, by the STA comprises:
receiving the TWT request carrying the link information sent, on one link, by the STA, in response to a change in the traffic condition information of at least one link.

23. The method of any one of claims 19 to 22, wherein receiving, on one link, the TWT request carrying the link information comprises:
receiving the TWT request carrying the link information sent, on one link based on a capability of a station (STA), by the STA.

24. The method of claim 23, wherein the link information further comprises service periods (SPs) corresponding to the link identifiers.

25. The method of claim 24, wherein receiving the TWT request carrying the link information sent, on one link based on the capability of the STA, by the STA comprises:
receiving the TWT request carrying the link information sent, on one link, by the STA, in response to the STA supporting synchronous transmit and receive (STR), wherein the respective TIDs corresponding to the link identifiers comprised in the link information are different.

26. The method of claim 25, wherein SPs corresponding to at least two link identifiers among the link identifiers are the same.

27. The method of claim 25, wherein SPs corresponding to the link identifiers are different.

28. The method of claim 24, wherein receiving the TWT request carrying the link information sent, on one link based on the capability of the STA, by the STA comprises:
receiving the TWT request carrying the link information sent, on one link, by the STA, in response to the STA not supporting synchronous transmit and receive (STR), wherein the respective TIDs corresponding to the link identifiers comprised in the link information are different.

29. The method of claim 28, wherein SPs corresponding to the link identifiers are different.

30. The method of claim 21, wherein the traffic condition information comprises:
downlink access delay and/or basic service set (BSS) load.

31. The method of any one of claims 19 to 30, further comprising:
sending a TWT response determined based on the TWT request, wherein the TWT response is configured to indicate determining to accept the TWT request.

32. The method of any one of claims 21 to 30, further comprising:
sending TWT information determined based on the TWT request in response to determining that the traffic condition information at a time when receiving the TWT request is not latest information, wherein the TWT information carries the link identifiers, and TIDs and SPs corresponding to the link identifiers.

33. An apparatus for transmitting data, applied to a station (STA), the apparatus comprising:
a first mapping module, configured to map, based on a delay requirement of a service, a traffic identifier (TID) of the service to one or more links meeting the delay requirement of the service; wherein the one or more links to which the TID of the service is mapped are configured to transmit the service.

34. An apparatus for transmitting data, applied to an access point (AP), the apparatus comprising:
a second mapping module, configured to map, based on a delay requirement of a service, a traffic identifier (TID) of the service to one or more links meeting the delay requirement of the service; wherein the one or more links to which the TID of the service is mapped are configured to transmit the service.

35. An apparatus for transmitting data, applied to an access point (AP), the apparatus comprising:
a second receiving module, configured to receive link information between traffic identifiers (TID) of services and respective links, wherein the link information comprises link identifiers and respective TIDs corresponding to the link identifiers;
wherein one or more links are determined in mapping, based on a delay requirement of a service, a TID of the service to the one or more links meeting the delay requirement; and the one or more links to which the TID of the service is mapped are configured to transmit the service.

36. A communication device, comprising:
a processor; and
a memory, having a program executable by the processor;
wherein the processor is configured to perform a method for transmitting data of any one of claims 1 to 16 or 17 to 32 when executing the executable program.

37. A computer storage medium, having a computer-executable program stored thereon; wherein when the executable program is executed by a processor, a method for transmitting data of any one of claims 1 to 16 or 17 to 32 is performed.
